# EUROPÄISCHE PATENTSCHRIFT

(11) **EP 2 472 093 B1**
(45) Veröffentlichungstag und Bekanntmachung des Hinweises auf die Patenterteilung: **26.08.2015**
(21) Anmeldenummer: 11009837.3
(22) Anmeldetag: 14.12.2011
(51) Int. Cl.: F02M 25/08, B60K 15/035

(54) **Kraftstoffsystem sowie Verfahren zum Betreiben eines Kraftstoffsystems**
Fuel system and method for operating a fuel system
Système de carburant et procédé destiné au fonctionnement d'un système de carburant

(30) Priorität: 21.12.2010 DE 102010055310
(43) Veröffentlichungstag der Anmeldung: 04.07.2012
(73) Patentinhaber: Audi AG, 85045 Ingolstadt (DE)
(72) Erfinder: Hagen, Harald, 95473 Creussen (DE)
(74) Vertreter: Lehle, Josef

(56) Entgegenhaltungen:
- EP-A2- 1 132 246
- WO-A1-2007/031466
- DE-A1- 10 060 239

## Beschreibung

Die Erfindung betrifft ein Kraftstoffsystem, insbesondere eines Kraftfahrzeugs, mit den Merkmalen des Oberbegriffs des Anspruchs 1. Die Erfindung betrifft weiterhin ein Verfahren zum Betreiben eines Kraftstoffsystems.

Kraftstoffsysteme der eingangs genannten Art sind aus dem Stand der Technik bekannt. Sie sind beispielsweise einem Kraftfahrzeug beziehungsweise einem Antriebssystem des Kraftfahrzeugs zugeordnet. Das Antriebssystem verfügt dabei insbesondere über zumindest eine Brennkraftmaschine und ist beispielsweise als Hybridantriebssystem ausgebildet, weist also die Brennkraftmaschine sowie zumindest eine elektrische Maschine auf, wobei die Brennkraftmaschine und die elektrische Maschine ein Antriebsmoment des Antriebssystems zumindest zeitweise gemeinsam erzeugen. Der Brennkraftmaschine wird von dem Kraftstoffsystem Kraftstoff aus dem Kraftstofftank zugeführt. Häufig wird als Kraftstoff ein flüchtiger Kohlenwasserstoffkraftstoff, beispielsweise Benzin, verwendet. Der Kraftstofftank enthält daher normalerweise sowohl ein Volumen an flüssigem Kraftstoff als auch ein Volumen an gasförmigem Kraftstoff, welches insbesondere oberhalb des flüssigen Kraftstoffs anfällt. Der Kraftstofftank kann ein geschlossener Tank, insbesondere ein Drucktank, oder ein teilgeschlossener, insbesondere auch druckloser, Tank sein. Der geschlossene Tank wird insbesondere zur Reduzierung von Emissionen verwendet.

Bedingt durch Schwankungen der Temperatur des Kraftstoffs, beispielsweise verursacht durch Veränderungen der Umgebungstemperatur, können Druckschwankungen in dem Kraftstofftank auftreten. Aus diesem Grund ist die Entlüftungseinrichtung dem Kraftstofftank zugeordnet. Sie dient der Entlüftung des Kraftstofftanks. Auf diese Weise kann ein zu hoher Druck in dem Kraftstofftank durch die Entlüftungseinrichtung reduziert werden. Zu diesem Zweck entlüftet die Entlüftungseinrichtung den Kraftstofftank beispielsweise durch eine Entlüftungsleitung. Bei dem Entlüften kann durch die Entlüftungseinrichtung beziehungsweise die Entlüftungsleitung sowohl gasförmiger als auch flüssiger Kraftstoff aus dem Kraftstofftank heraus gelangen. Der entlüftete Kraftstoff liegt also zunächst als Gemisch aus gasförmigem und flüssigem Kraftstoff vor. Dies ist insbesondere dann der Fall, wenn das Entlüften des Kraftstofftanks bei hohem Kraftstofftankinnendruck durchgeführt wird. Dabei liegen bedingt durch den hohen Druck beziehungsweise die große Druckdifferenz zwischen Kraftstofftankinnendruck und dem Druck außerhalb des Kraftstofftanks hohe Strömungsgeschwindigkeiten des entlüfteten Kraftstoffs vor, wodurch flüssiger Kraftstoff von dem gasförmigen Kraftstoff mitgerissen wird.

Der gasförmige Kraftstoff darf ohne Weiteres der Brennkraftmaschine beziehungsweise deren Ansaugsystem zugeführt werden, wobei zwischen dem Kraftstofftank und der Brennkraftmaschine ein der Entlüftungseinrichtung zugeordneter Kraftstoffspeicher, welcher bevorzugt als Aktivkohlespeicher ausgebildet ist, angeordnet sein kann. Der Kraftstoffspeicher dient dazu, gasförmigen Kraftstoff zwischenzuspeichern, also aufzunehmen, wenn nicht benötigter gasförmiger Kraftstoff vorliegt und abzugeben, sobald der gasförmige Kraftstoff in die Brennkraftmaschine abgeführt werden kann. Es darf jedoch kein flüssiger Kraftstoff in den Kraftstoffspeicher beziehungsweise die Brennkraftmaschine gelangen.

Aus diesem Grund weist die Entlüftungseinrichtung die zumindest eine Abscheidevorrichtung auf, welche zur Trennung von gasförmigem und flüssigem Kraftstoff dient. Die Abscheidevorrichtung ist demnach dazu vorgesehen, das Überführen von flüssigem Kraftstoff von dem Kraftstofftank durch die Entlüftungseinrichtung in die Brennkraftmaschine beziehungsweise den Kraftstoffspeicher zu verhindern. Dabei scheidet die Abscheidevorrichtung flüssigen Kraftstoff ab und lässt gasförmigen Kraftstoff passieren. Der abgeschiedene flüssige Kraftstoff gelangt in den Zwischenspeicher der Abscheidevorrichtung. Der Begriff Zwischenspeicher bedeutet dabei nicht, dass tatsächlich eine (Zwischen-) Speicherung des flüssigen Kraftstoffs vorgesehen ist. Vielmehr kann der flüssige Kraftstoff unmittelbar aus dem Zwischenspeicher beziehungsweise der Abscheidevorrichtung abgeführt werden, bevorzugt in Richtung des Kraftstofftanks. Dabei kann sich jedoch, beispielsweise durch eine Begrenzung des Abführvolumenstroms, insbesondere durch einen Leitungsquerschnitt oder dergleichen, ein Anstieg des Füllstands des Zwischenspeichers ergeben. Der abgeschiedene flüssige Kraftstoff kann demnach zumindest zeitweise nicht so schnell abgeführt werden, wie er in den Zwischenspeicher eingebracht wird. Selbstverständlich ist auch eine Zwischenspeicherung des flüssigen Kraftstoffs, beispielsweise über eine bestimmte Zeitspanne realisierbar.

Beim Betreiben des Kraftstoffsystems sollte verhindert werden, dass die sich in dem Zwischenspeicher beziehungsweise der Abscheidevorrichtung befindliche Menge des flüssigen Kraftstoffs eine Grenzmenge überschreitet, der Füllstand des Zwischenspeichers demnach größer als ein Grenzfüllstand wird, weil dies die Wirksamkeit der Abscheidevorrichtung beeinträchtigen kann. Je größer die Menge flüssigen Kraftstoffs in dem Zwischenspeicher ist, umso größer wird das Risiko, dass zusammen mit dem gasförmigen Kraftstoff auch flüssiger Kraftstoff wieder aus der Abscheidevorrichtung heraus gelangt und in Richtung des Kraftstoffspeichers beziehungsweise der Brennkraftmaschine mitgenommen wird.

Aus dem Stand der Technik ist die Druckschrift EP 1 132 246 A2 bekannt. Diese betrifft eine Entlüftungseinrichtung für einen Kraftstoffbehälter mit einem im Inneren des Kraftstoffbehälters angeordneten Ausgleichsbehälter und mindestens zwei Entlüftungsleitungen. Die Entlüftungsleitungen verlaufen dicht unterhalb der oberen Behälterwandung beginnend bis in den Ausgleichsbehälter und erstrecken sich in diesem bis in Richtung einer gegenüberliegenden Behälterwandung. Die Druckschrift WO 2007/031466 A1 zeigt eine Entlüftungseinrichtung für einen Kraftstoffbehälter mit einer Flüssigkeitsfalle und einer zur Leerung der Flüssigkeitsfalle vorgesehenen Saugstrahlpumpe. Die Entlüftungseinrichtung hat einen Füllstandsgrenzschalter zur Erfassung des Füllstandes an Kraftstoff in der Flüssigkeitsfalle. Der Saugstrahlpumpe ist ein Ventil vorgeschaltet, welches mit dem Füllstandsgrenzschalter in Verbindung steht. Über das Ventil wird die Saugstrahlpumpe erst aktiviert, wenn ein vorgesehener Füllstand an Kraftstoff in der Flüssigkeitsfalle überschritten wird. Schließlich zeigt die Druckschrift DE 100 60 239 A1 eine Vorrichtung zum Be- und Entlüften eines Kraftstoffbehälters in einem Kraftfahrzeug, mit zumindest einer vom Kraftstoffbehälter zu einem Aktivkohlefilter führenden Entlüftungsleitung, die mit einem flüssigen Kraftstoff zurückhaltenden Ausgleichsbehälter kommuniziert, wobei zur Erhöhung der Funktionssicherheit bei definierten Betriebszuständen eine elektrisch zuschaltbare Pumpe vorgesehen ist, die bei diesen Betriebszuständen sporadisch einschaltbar ist und gegebenenfalls im Ausgleichsbehälter angesammelten Kraftstoff in den Kraftstoffbehälter zurückfördert.

Es ist demnach Aufgabe der Erfindung, ein Kraftstoffsystem vorzuschlagen, mit welchem ein zuverlässiger Betrieb sichergestellt werden kann, insbesondere auch dann, wenn ein großer Volumenstrom (Menge pro Zeiteinheit, alternativ: Massenstrom) des, insbesondere flüssigen, Kraftstoffs aus dem Kraftstofftank in die Abscheidevorrichtung gelangt.

Dies wird erfindungsgemäß mit einem Kraftstoffsystem mit den Merkmalen des Anspruchs 1 erreicht. Dabei ist zunächst vorgesehen, dass die Abscheidevorrichtung eine Füllstandsbestimmungseinrichtung zur Bestimmung des Füllstands in dem Zwischenspeicher aufweist. Mithilfe der Füllstandsbestimmungseinrichtung kann die Menge flüssigen Kraftstoffs bestimmt werden, welche sich in dem Zwischenspeicher befindet. Dabei kann in Abhängigkeit des Füllstands eine Betriebsart des Kraftstoffsystems oder zumindest einer weiteren Einrichtung des Antriebssystems des Kraftfahrzeugs, insbesondere aus einer Vielzahl von Betriebsarten, ausgewählt werden. Beispielsweise wird bei einem bestimmten ersten Füllstand die Betriebsart des Kraftstoffsystems derart gewählt, dass die Entlüftungseinrichtung einen bestimmten ersten Volumenstrom beziehungsweise Massenstrom zulässt, während bei einem zweiten, größeren Füllstand eine andere Betriebsart gewählt wird, bei welcher die Entlüftungseinrichtung lediglich einen zweiten, kleineren Volumenstrom beziehungsweise Massenstrom zulässt. Auf diese Weise wird verhindert, dass bei einer großen Menge flüssigen Kraftstoffs in dem Zwischenspeicher der die Entlüftungseinrichtung durchströmende Volumenstrom beziehungsweise Massenstrom gasförmigen Kraftstoffs so groß ist, dass von diesem ein Teil des flüssigen Kraftstoffs mitgerissen wird. Somit wird insbesondere der Kraftstoffspeicher des Kraftstoffsystems vor flüssigem Kraftstoff geschützt.

Eine Weiterbildung der Erfindung sieht vor, dass die Füllstandsbestimmungseinrichtung mindestens einen mechanischen und/oder elektrischen Füllstandssensor umfasst. Der Füllstandssensor dient dabei der Bestimmung des Füllstands in dem Zwischenspeicher, insbesondere eines lokalen Füllstands im Bereich des Füllstandssensors, aus welchem der Füllstand bestimmbar ist. Die Verwendung mehrerer Füllstandssensoren kann dabei eine genauere Bestimmung des Füllstands in dem Zwischenspeicher erlauben, insbesondere wenn die Füllstandssensoren voneinander beabstandet angeordnet sind. Der Füllstandssensor kann beispielsweise auf einem mechanischen oder einem elektrischen Wirkprinzip basieren. Der mechanische Füllstandssensor weist beispielsweise einen Schwimmer auf, welcher eine geringere Dichte aufweist als der flüssige Kraftstoff, so dass er von dem Kraftstoff nach oben gedrängt wird. Aus der Position des Schwimmers lässt sich somit auf den Füllstand schließen.

Eine Weiterbildung der Erfindung sieht vor, dass der Füllstandssensor ein kapazitiver, induktiver oder resistiver Sensor ist. Bei dem kapazitiven Sensor wird die elektrische Kapazität zwischen zwei oder mehr Elektroden des Sensors bestimmt. Dabei steht ein Zwischenraum zwischen den Elektroden in Strömungsverbindung mit dem Zwischenspeicher, so dass flüssiger Kraftstoff in den Zwischenraum gelangen kann. Die Kapazität des Sensors ändert sich nun, wenn sich der Füllstand in dem Zwischenspeicher und damit dem Zwischenraum verändert, weil sich die Dielektrizität zwischen den Elektroden verändert. Bei dem induktiven Sensor wird entsprechend einer Änderung der Induktivität - beispielsweise aufgrund einer Druckänderung, wenn der Sensor auf dem Boden des Zwischenspeichers angeordnet ist - und bei dem resistiven Sensor der Widerstand zwischen Elektroden des Sensors und daraus der Füllstand bestimmt.

Eine Weiterbildung der Erfindung sieht vor, dass der Füllstandssensor ein Radarsensor, ein Mikrowellensensor, ein optischer Sensor oder ein Flüssigkeitssensor ist. Der Radarsensor arbeitet beispielsweise mit Radarimpulsen, die von einer Antenne abgestrahlt und von einer Oberfläche des Kraftstoffs in dem Zwischenspeicher reflektiert werden. Aus der Laufzeit eines oder mehrerer der Radarimpulse kann auf den Füllstand in dem Zwischenspeicher geschlossen werden. Der Radarsensor ist daher bevorzugt an einem Boden oder einer Decke des Zwischenspeichers angeordnet. Bei dem Mikrowellensensor ist es üblicherweise vorgesehen, dass ein Sender und ein Empfänger einander gegenüberliegend in dem Zwischenspeicher angeordnet sind, wobei beispielsweise der Sender an dem Boden und der Empfänger an der Decke oder umgekehrt angeordnet sind. Von dem Sender werden Mikrowellenimpulse ausgesandt und von dem Empfänger empfangen. Weil der in dem Zwischenspeicher befindliche flüssige Kraftstoff die Mikrowellenimpulse stärker dämpft als der gasförmige Kraftstoff, kann aus der Intensität der empfangenen Mikrowellenimpulse auf den Füllstand des Zwischenspeichers geschlossen werden. Mit dem optischen Sensor kann eine Absorption von Licht oder ein Verschwinden der Totalreflektion festgestellt werden und daraus auf den Füllstand in dem Zwischenspeicher geschlossen werden. Mit dem Flüssigkeitssensor kann festgestellt werden, ob dieser von flüssigem Kraftstoff oder von gasförmigem Kraftstoff umgeben ist. Der Flüssigkeitssensor ist beispielsweise in einer Entlüftungsleitung zwischen dem Kraftstofftank und dem Zwischenspeicher, jedoch außerhalb des Zwischenspeichers beziehungsweise der Abscheidevorrichtung angeordnet. Wird mit dem Flüssigkeitssensor festgestellt, dass dieser von flüssigem Kraftstoff umgeben ist beziehungsweise er damit in Kontakt steht, kann auf das Vorliegen eines bestimmten Füllstands in dem Zwischenspeicher geschlossen werden.

Eine Weiterbildung der Erfindung sieht mindestens ein der Abscheidevorrichtung strömungstechnisch vorgeschaltetes oder nachgeschaltetes Entlüftungsventil zur Entlüftung des Kraftstofftanks durch die Abscheidevorrichtung vor. Das Entlüftungsventil ist dabei der Entlüftungseinrichtung zugeordnet. Das Entlüftungsventil kann derart eingestellt werden, dass es zur Entlüftung des Kraftstofftanks öffnet oder zur Unterbrechung der Entlüftung schließt. Es liegt beispielsweise als FTIV (Fuel Tank Isolation Valve) vor. Das Entlüftungsventil kann als Taktventil ausgebildet sein, welches ein Einstellen von diskreten Schaltzuständen (geöffnet und geschlossen) erlaubt. Besonders bevorzugt ist das Entlüftungsventil als Stetigventil ausgelegt, welches nicht lediglich die diskreten Schaltzustände zulässt, sondern ein Einstellen des Durchströmungsquerschnitts in mehreren Stufen, besonders bevorzugt ein stetiges Einstellen, ermöglicht. Auf diese Weise ist der Volumenstrom durch die Abscheidevorrichtung, insbesondere stetig, gesteuert und/oder geregelt einstellbar. Das Entlüftungsventil ist der Abscheidevorrichtung strömungstechnisch vorgeschaltet oder nachgeschaltet, der Kraftstoff muss demnach für ein Durchströmen der Abscheidevorrichtung stets auch das Entlüftungsventil passieren. Das Entlüftungsventil kann mit der Abscheidevorrichtung oder der Kraftstofffördereinrichtung integriert sein. Das Entlüftungsventil kann also modular in die Kraftstofffördereinrichtung integriert vorliegen.

Eine Weiterbildung der Erfindung sieht vor, dass die Füllstandsbestimmungseinrichtung und/oder ein der Füllstandsbestimmungseinrichtung zugeordnetes Steuergerät dazu ausgebildet sind, das Entlüftungsventil, ein Überströmventil und/oder mindestens eine Kraftstofffördereinrichtung, insbesondere eine Saugstrahlpumpe, in Abhängigkeit von dem Füllstand des Zwischenspeichers gesteuert und/oder geregelt zu betreiben. Wie vorstehend bereits beschrieben, kann das Entlüftungsventil derart betrieben werden, dass bei einem ersten Füllstand des Zwischenspeichers ein erster Volumenstrom und bei einem zweiten, höheren Füllstand ein zweiter, kleinerer Volumenstrom durch die Entlüftungseinrichtung beziehungsweise die Abscheidevorrichtung mittels des Entlüftungsventils eingestellt wird. Zu diesem Zweck wird das Entlüftungsventil von der Füllstandsbestimmungseinrichtung beziehungsweise dem Steuergerät entsprechend betrieben. Die Kraftstofffördereinrichtung dient beispielsweise dazu, Kraftstoff aus dem Zwischenspeicher in Richtung des Kraftstofftanks zu fördern. Dazu kann sie als Saugstrahlpumpe vorliegen. Die Kraftstofffördereinrichtung kann alternativ als Kraftstofffördermittel ausgebildet sein, welches dazu dient, Kraftstoff aus dem Kraftstoffsystem heraus zu fördern, beispielsweise in Richtung der Brennkraftmaschine. Ein solches Kraftstofffördermittel liegt insbesondere als Kraftstoffpumpe vor. Entsprechend den vorstehenden Ausführungen kann zusätzlich oder alternativ auch das Überströmventil betrieben werden, über welches eine Strömungsverbindung zwischen einem Ausgang des Kraftstofffördermittels, mit welchem Kraftstoff aus dem Kraftstoffsystem förderbar ist, und dem Kraftstofftank herstellbar ist. Durch das Überströmventil kann somit bereits mittels des Kraftstofffördermittels geförderter Kraftstoff wieder in den Kraftstofftank zurückgeleitet werden. Dies dient insbesondere dazu den Kraftstofftankinnendruck einzustellen.

Eine Weiterbildung der Erfindung sieht vor, dass der Abscheidevorrichtung zumindest ein in Abhängigkeit des Kraftstofftankfüllstands schaltendes Belüftungsventil und/oder zumindest ein dem Kraftstofftank zugeordnetes Sicherheitsventil strömungstechnisch vorgeschaltet sind. Das Belüftungsventil ist insbesondere als FLVV (Fill Limit Venting Valve) ausgebildet. Ein solches ermöglicht ein Belüften des Kraftstofftanks, solange der Kraftstofftankfüllstand kleiner ist als ein bestimmter Kraftstofftankfüllstand, insbesondere Kraftstofftankmaximalfüllstand. Über das Belüftungsventil wird somit das Belüften des Kraftstofftanks, insbesondere bei einem Zuführen von Kraftstoff in den Kraftstofftank, sichergestellt. Zusätzlich oder alternativ kann das Sicherheitsventil vorgesehen sein, welches beispielsweise als Überroll-Sicherheitsventil beziehungsweise ROV (Roll Over Valve) ausgebildet ist. Sowohl das Belüftungsventil als auch das Sicherheitsventil sind üblicherweise dem Kraftstofftank zugeordnet und der Abscheidevorrichtung strömungstechnisch vorgeschaltet, so dass der Kraftstoff zunächst das Belüftungsventil beziehungsweise das Sicherheitsventil durchläuft, bevor es in die Abscheidevorrichtung gelangt.

Die Erfindung betrifft weiterhin ein Verfahren zum Betreiben eines Kraftstoffsystems, insbesondere gemäß den vorstehenden Ausführungen, wobei das Kraftstoffsystem einen Kraftstofftank und eine Entlüftungseinrichtung zur Entlüftung des Kraftstofftanks aufweist und die Entlüftungseinrichtung über zumindest eine einen Zwischenspeicher für flüssigen Kraftstoff aufweisende Abscheidevorrichtung verfügt. Dabei ist vorgesehen, dass der Füllstand in dem Zwischenspeicher mittels einer der Abscheidevorrichtung zugeordneten Füllstandsbestimmungseinrichtung bestimmt wird. Das Kraftstoffsystem kann gemäß den vorstehenden Ausführungen weitergebildet sein, so dass insoweit auf diese verwiesen sei.

Eine Weiterbildung der Erfindung sieht vor, dass ein Entlüftungsventil, ein Überströmventil und/oder mindestens eine Kraftstofffördereinrichtung, insbesondere eine Saugstrahlpumpe, in Abhängigkeit von dem Füllstand des Zwischenspeichers gesteuert und/oder geregelt betrieben werden. Auch hierzu sei auf die vorstehenden Ausführungen verwiesen.

Eine Weiterbildung der Erfindung sieht vor, dass das Entlüftungsventil bei einem Füllstand des Zwischenspeichers unterhalb eines bestimmten Grenzfüllstands in einer ersten Betriebsart und oberhalb des Grenzfüllstands in einer zweiten Betriebsart betrieben wird, wobei ein das Entlüftungsventil durchströmender Volumenstrom in der zweiten Betriebsart kleiner gewählt wird als in der ersten Betriebsart und/oder in der zweiten Betriebsart ein Öffnen des Entlüftungsventils langsamer erfolgt als in der ersten Betriebsart. Wie vorstehend bereits erläutert wird die Betriebsart entsprechend dem Füllstand des Zwischenspeichers aus mehreren Betriebsarten ausgewählt. Dabei wird bei einem Füllstand unterhalb des Grenzfüllstands die erste Betriebsart und oberhalb des Grenzfüllstands oder bei dem Grenzfüllstand die zweite Betriebsart ausgewählt. Bei einem Entlüften des Kraftstofftanks mittels der Entlüftungseinrichtung wird der Volumenstrom durch nur teilweises Öffnen des Entlüftungsventils in der zweiten Betriebsart kleiner eingestellt als in der ersten Betriebsart. Bei geöffnetem Entlüftungsventil ist also der Volumenstrom in der zweiten Betriebsart kleiner als in der ersten Betriebsart.

Zusätzlich oder alternativ kann das Entlüftungsventil derart betrieben werden, dass es in der zweiten Betriebsart langsamer öffnet als in der ersten Betriebsart. Durch das langsamere Öffnen des Entlüftungsventils wird verhindert, dass flüssiger Kraftstoff aus dem Zwischenspeicher von dem gasförmigen Kraftstoff mitgerissen wird, indem der Kraftstofftankinnendruck zu Beginn des Öffnen langsamer abgebaut wird als dies bei dem schnellen Öffnen der Fall wäre. Ist der Füllstand kleiner als der bestimmte Grenzfüllstand, so sind derartige Sicherheitsvorkehrungen nicht notwendig, so dass das Belüfteten des Kraftstofftanks mit dem maximal möglichen Volumenstrom erfolgen und das Entlüftungsventil schnell geöffnet werden darf.

Die Erfindung betrifft auch ein Antriebssystem mit einem Kraftstoffsystem gemäß den vorstehenden Ausführungen, welches insbesondere gemäß dem vorstehend beschriebenen Verfahren betrieben wird beziehungsweise betreibbar ist. Das Antriebssystem verfügt dabei insbesondere über zumindest eine Brennkraftmaschine und ist beispielsweise als Hybridantriebssystem ausgebildet.

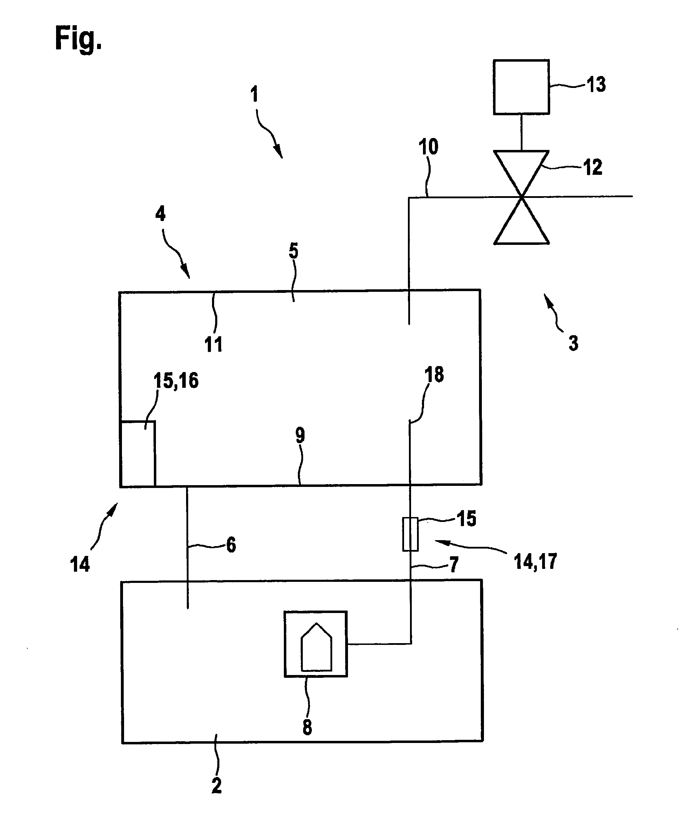

Die Erfindung wird nachfolgend anhand der in der Zeichnung dargestellten Ausführungsbeispiele näher erläutert, ohne dass eine Beschränkung der Erfindung erfolgt. Dabei zeigt die einzige
- Figur: eine schematische Ansicht eines Kraftstoffsystems.

Die Figur zeigt eine schematische Darstellung eines Kraftstoffsystems 1. Das Kraftstoffsystem 1 ist beispielsweise Bestandteil eines Kraftfahrzeugs beziehungsweise eines Antriebssystems des Kraftfahrzeugs. Das Kraftstoffsystem 1 verfügt über einen Kraftstofftank 2 und eine Entlüftungseinrichtung 3 zur Entlüftung des Kraftstofftanks 1. Die Entlüftungseinrichtung 3 weist eine Abscheidevorrichtung 4 mit einem Zwischenspeicher 5 auf. Die Abscheidevorrichtung 4 dient dazu, flüssigen Kraftstoff aus einem Gemisch von flüssigem und gasförmigem Kraftstoff abzuscheiden. Der abgeschiedene flüssige Kraftstoff liegt anschließend in dem Zwischenspeicher 5 vor und kann, beispielsweise durch eine Rückführungsleitung 6, wieder dem Kraftstofftank 2 zugeführt werden. Die Rückführungsleitung 6 weist bevorzugt ein Ventil, insbesondere Drainageventil beziehungsweise Rückschlagventil, auf. Anstelle der Rückführungsleitung 6 kann auch lediglich das Ventil vorgesehen sein, insbesondere wenn die Abscheidevorrichtung 4 zumindest bereichsweise in dem Kraftstofftank 2 vorliegt, so dass durch das Ventil aus dem Zwischenspeicher 5 austretender Kraftstoff unmittelbar in den Kraftstofftank gelangt. Das Ventil ist derart ausgebildet, dass Kraftstoff durch die Rückführungsleitung 6 lediglich aus dem Zwischenspeicher 5 herausgelangen, nicht jedoch in ihn hineingelangen kann. Somit wird verhindert, dass durch die Rückführungsleitung 6 Kraftstoff aus dem Kraftstofftank 2 in den Zwischenspeicher 5 gelangt.

Die Entlüftungseinrichtung 3 steht über eine Entlüftungsleitung 7 in Strömungsverbindung mit dem Kraftstofftank 2. Auf der dem Kraftstofftank 2 zugewandten Seite der Entlüftungsleitung 7 beziehungsweise in dem Kraftstofftank 2 ist dabei ein Belüftungsventil 8 vorgesehen, welches in Abhängigkeit des Kraftstofftankfüllstands schaltet. Üblicherweise ist das Belüftungsventil 8 derart ausgeführt, dass es nur bei einem Kraftstofftankfüllstand unterhalb eines bestimmten Kraftstofftankfüllstands, insbesondere eines Maximalkraftstofftankfüllstands, geöffnet ist, also Kraftstoff aus dem Kraftstofftank in die Entlüftungsleitung 7 gelangen kann. Die Entlüftungsleitung 7 mündet in den Zwischenspeicher 5 der Abscheidevorrichtung 4 ein, bevorzugt durch einen Boden 9 des Zwischenspeichers 5. Beabstandet von der Entlüftungsleitung 7 beziehungsweise deren Mündungsstelle in den Zwischenspeicher 5 mündet eine Auslassleitung 10 in den Zwischenspeicher 5 ein, bevorzugt durch eine Decke 11 des Zwischenspeichers 5. Die Mündungsstelle der Auslassleitung 10 in den Zwischenspeicher 5 ist damit bevorzugt derart angeordnet, dass lediglich gasförmiger Kraftstoff aus dem Zwischenspeicher 5 in die Auslassleitung 10 gelangen kann. Dazu sind die Mündungsstellen von Auslassleitung 10 und Entlüftungsleitung 7 bevorzugt an gegenüberliegenden Seiten des Zwischenspeichers 5 angeordnet. Die Auslassleitung 10 weist ein Entlüftungsventil 12 auf, welches mittels einer Betätigungseinrichtung 13 betätigbar ist. Das Entlüftungsventil 12 und die Betätigungseinrichtung 13 sind dabei bevorzugt derart ausgebildet, dass der Durchströmungsquerschnitt des Entlüftungsventils 12 stetig einstellbar ist.

Die Abscheidevorrichtung 4 ist üblicherweise zumindest bereichsweise, insbesondere vollständig, in dem Kraftstofftank 2, angeordnet. Auch eine Anordnung außerhalb des Kraftstofftanks 2 ist jedoch möglich. Alternativ kann die Abscheidevorrichtung 4 auch in eine Leitung, beispielsweise die Entlüftungsleitung 7, integriert sein. In einer bevorzugten Ausführungsform ist die Abscheidevorrichtung derart ausgebildet, dass sie beziehungsweise die Entlüftungseinrichtung 3 einen bestimmten Druckverlust aufweist. Dieser ist dabei derart gewählt, dass bei einem Entlüften der Kraftstofftanks 2 mittels der Entlüftungseinrichtung 3 ein eventuell vorhandenes Ventil, beispielsweise das Belüftungsventil 8, nicht in dessen Geschlossenstellung gebracht wird. Das Belüftungsventil 8 weist üblicherweise einen Schwimmer auf, welcher einen Ventilsitz des Belüftungsventils 8 freigibt, solange der Kraftstofftankfüllstand kleiner als ein bestimmter Kraftstofftankfüllstand ist. Wird der mittels der Entlüftungseinrichtung 3, also durch das Belüftungsventil 8, abgeführte Volumenstrom größer als ein Auslegungsvolumenstrom, so kann der Schwimmer von dem Volumenstrom beziehungsweise dem entlüfteten Kraftstoff in den Ventilsitz, also in die Geschlossenstellung verlagert werden, so dass ein weiteres Entlüften des Kraftstofftanks 2 nicht möglich ist. Dies gilt insbesondere bei vollständig geöffnetem Entlüftungsventil 12.

Üblicherweise wird der Druckverlust der Entlüftungseinrichtung 3 durch Anpassen des Entlüftungsventils 12 eingestellt, beispielsweise durch Einbringen eines Drosselelements. Hier soll es nun bevorzugt vorgesehen sein, dass der Druckverlust der Entlüftungseinrichtung 3 durch Anpassen der Abscheidevorrichtung 4 beziehungsweise deren Druckverlust erfolgt, beispielsweise durch Vorsehen eines angepassten Drosselelements. Das Entlüftungsventil 12 weist demnach bevorzugt kein Drosselelement auf. Das Drosselelement kann jedoch selbstverständlich zusätzlich vorgesehen sein.

Zur Bestimmung des Füllstands in dem Zwischenspeicher 5 weist die Abscheidevorrichtung 4 eine Füllstandsbestimmungseinrichtung 14 auf. Die Füllstandsbestimmungseinrichtung 14 verfügt dabei über mindestens einen Füllstandssensor 15. Das in der Figur dargestellte Ausführungsbeispiel weist zwei Füllstandssensoren 15 auf, wobei einer der Füllstandssensor 15 ein kapazitiver Sensor 16 und ein weiterer ein Flüssigkeitssensor 17 ist. Anstelle des kapazitiven Sensors 16 kann beispielsweise auch ein Radarsensor, ein Mikrowellensensor oder ein optischen Sensor vorgesehen sein. Der kapazitive Sensor 16 weist mindestens zwei Elektroden (nicht dargestellt) auf, zwischen welchen ein Zwischenraum vorliegt, welcher in Fluidverbindung mit dem Zwischenspeicher 5 steht. Die Elektroden sind dabei derart angeordnet, dass der Zwischenraum sich in Abhängigkeit von dem Füllstand des Zwischenspeichers 5 mit flüssigem Kraftstoff füllen kann. Das bedeutet, dass je höher der Füllstand in dem Zwischenspeicher 5 ist, desto vollständiger ist der Zwischenraum gefüllt. Dies bewirkt eine Änderung der Dielektrizität zwischen den Elektroden, welche eine Änderung der Kapazität bewirkt. Durch Bestimmung der Kapazität zwischen den Elektroden kann demnach auf den Füllstand in den Zwischenspeicher 5 geschlossen werden.

Der Flüssigkeitssensor 17 ist beispielsweise als, insbesondere zumindest bereichsweise elektrisch leitfähige, Folie ausgebildet. Er dient dazu, festzustellen, ob in der Entlüftungsleitung 7 flüssiger oder gasförmiger Kraftstoff vorliegt. Vorzugsweise ist eine Bestimmung des Anteils an flüssigem Kraftstoff an dem Gemisch aus gasförmigem und flüssigem Kraftstoff in der Entlüftungsleitung 7 zumindest näherungsweise möglich. Weil die Entlüftungsleitung 7 den Boden 9 des Zwischenspeichers 5 durchgreift und eine bestimmte Strecke in den Zwischenspeicher 5 hineinragt, kann bei hauptsächlichem Vorliegen von flüssigem Kraftstoff im Bereich des Flüssigkeitssensors 17 auf einen Füllstand in dem Zwischenspeicher 5 geschlossen werden, bei welchem der Zwischenspeicher 5 bis in eine Höhe, welche der Strecke des Hineinragens entspricht, gefüllt ist. Dabei ist demnach eine Mündung 18 der Entlüftungsleitung 7 in dem Zwischenspeicher 5 von flüssigem Kraftstoff umgeben.

Die Abscheidevorrichtung 4 dient dazu, durch die Entlüftungsleitung 7 aus dem Kraftstofftank 2 in die Abscheidevorrichtung 4 gelangenden flüssigen Kraftstoff aus dem Gemisch aus gasförmigem und flüssigem Kraftstoff abzuscheiden und bevorzugt wieder in den Kraftstofftank 2 einzubringen, insbesondere durch die Rückführungsleitung 6. Die Rückführungsleitung 6 ist dabei bevorzugt derart angeordnet, dass der flüssige Kraftstoff aus dem Zwischenspeicher 5 durch Schwerkrafteinfluss in Richtung des Kraftstofftanks 2 gedrängt wird. Die Funktion der Abscheidevorrichtung 4 kann jedoch nur sichergestellt werden, wenn der Füllstand des Zwischenspeichers 5 unterhalb eines bestimmten Grenzfüllstands liegt. Überschreitet der Füllstand diesen Grenzfüllstand, so kann es dazu kommen, dass flüssiger Kraftstoff aus dem Zwischenspeicher 5 von dem gasförmigen Kraftstoff in die Auslassleitung 10 mitgerissen wird und durch diese in Richtung der Brennkraftmaschine oder eines Kraftstoffspeichers, insbesondere eines Aktivkohlespeichers, gelangen kann. Dies ist jedoch unerwünscht, weil flüssiger Kraftstoff insbesondere den Aktivkohlespeicher beschädigen kann beziehungsweise zu einer Reduzierung von dessen Speicherkapazität führt.

Aus diesem Grund ist es vorgesehen, dass die Füllstandsbestimmungseinrichtung 14 beziehungsweise ein der Füllstandsbestimmungseinrichtung 14 zugeordnetes Steuergerät dazu ausgebildet ist, das Entlüftungsventil 12 und/oder weitere Einrichtungen des Kraftstoffsystems 1 in Abhängigkeit von dem Füllstand des Zwischenspeichers 5 gesteuert beziehungsweise geregelt zu betreiben. Dabei soll insbesondere das Entlüftungsventil 12 bei einem Füllstand des Zwischenspeichers 5 unterhalb des bestimmten Grenzfüllstands in einer ersten Betriebsart und oberhalb des Grenzfüllstands in einer zweiten Betriebsart betrieben werden. Vorzugsweise wird ein das (geöffnete) Entlüftungsventil 12 durchströmender Volumenstrom in der zweiten Betriebsart kleiner gewählt als in der ersten Betriebsart. Alternativ oder zusätzlich kann es auch vorgesehen sein, dass in der zweiten Betriebsart ein Öffnen des Entlüftungsventils 12 langsamer erfolgt als in der ersten Betriebsart. Auf diese Weise wird verhindert, dass flüssiger Kraftstoff in die Auslassleitung 10 gerät.

Zusätzlich oder alternativ kann es auch vorgesehen sein, dass die Füllstandsbestimmungseinrichtung 14 beziehungsweise das Steuergerät dazu ausgebildet ist, ein hier nicht dargestelltes Überströmventil und/oder eine ebenfalls nicht dargestellte Kraftstofffördereinrichtung in Abhängigkeit von dem Füllstand zu betreiben. Das Überströmventil dient dabei dazu, einen Kraftstofftankdruck des Kraftstofftanks 12 einzustellen. Die Kraftstofffördereinrichtung ist dazu vorgesehen, flüssigen Kraftstoff aus der Abscheidevorrichtung 4 in Richtung des Kraftstofftanks 2 zu fördern. Zu diesem Zweck ist das Kraftstofffördermittel beispielsweise als Saugstrahlpumpe ausgebildet. Zusätzlich oder alternativ kann es auch vorgesehen sein, dass die Kraftstofffördereinrichtung als Kraftstoffpumpe vorliegt, welche dazu dient, Kraftstoff aus dem Kraftstofftank 2 in Richtung der Brennkraftmaschine zu fördern. Dabei kann vorgesehen sein, die Leistung der Kraftstoffpumpe zu erhöhen, sobald der Füllstand des Zwischenspeichers 5 den bestimmten Grenzfüllstand überschreitet. Insbesondere kann mittels der Füllstandsbestimmungseinrichtung 14 auch der Volumenstrom des aus dem Kraftstofftank 2 durch die Entlüftungsleitung 7 heraus gelangenden beziehungsweise ausgasenden Kraftstoffs, bestimmt werden. Zu diesem Zweck ist es vorteilhaft, wenn das Entlüftungsventil 12 während der Bestimmung geschlossen ist.

### BEZUGSZEICHENLISTE

- 1: Kraftstoffsystem
- 2: Kraftstofftank
- 3: Entlüftungseinrichtung
- 4: Abscheidevorrichtung
- 5: Zwischenspeicher
- 6: Rückführleitung
- 7: Entlüftungsleitung
- 8: Belüftungsventil
- 9: Boden
- 10: Auslassleitung
- 11: Decke
- 12: Entlüftungsventil
- 13: Betätigungseinrichtung
- 14: Füllstandsbestimmungseinrichtung
- 15: Füllstandssensor
- 16: Kapazitiver Sensor
- 17: Flüssigkeitssensor
- 18: Mündung

## Patentansprüche

1. Kraftstoffsystem (1), insbesondere eines Kraftfahrzeugs, mit einem Kraftstofftank (2) und einer Entlüftungseinrichtung (3) zur Entlüftung des Kraftstofftanks (2), wobei die Entlüftungseinrichtung (3) über zumindest eine einen Zwischenspeicher (5) für flüssigen Kraftstoff aufweisende Abscheidevorrichtung (4) verfügt, wobei mindestens ein der Abscheidevorrichtung (4) strömungstechnisch vorgeschaltetes oder nachgeschaltetes Entlüftungsventil (7) zur Entlüftung des Kraftstofftanks (2) durch die Abscheidevorrichtung (4) vorgesehen ist, und wobei die Abscheidevorrichtung (4) eine Füllstandsbestimmungseinrichtung (14) zur Bestimmung des Füllstands in dem Zwischenspeicher (5) aufweist, **dadurch gekennzeichnet, dass** ein der Füllstandsbestimmungseinrichtung (14) zugeordnetes Steuergerät dazu ausgebildet ist, das Entlüftungsventil (12) in Abhängigkeit von dem mithilfe der Füllstandsbestimmungseinrichtung (14) bestimmten Füllstand des Zwischenspeichers (5) gesteuert und/oder geregelt zu betreiben.

2. Kraftstoffsystem nach Anspruch 1, **dadurch gekennzeichnet, dass** die Füllstandsbestimmungeinrichtung (14) mindestens einen mechanischen und/oder elektrischen Füllstandssensor (15) umfasst.

3. Kraftstoffsystem nach Anspruch 2, **dadurch gekennzeichnet, dass** der Füllstandssensor (15) ein kapazitiver Sensor (16), induktiver Sensor oder resistiver Sensor ist.

4. Kraftstoffsystem nach einem der Ansprüche 2 oder 3, **dadurch gekennzeichnet, dass** der Füllstandssensor (15) ein Radarsensor, ein Mikrowellensensor, ein optischer Sensor oder ein Flüssigkeitssensor (17) ist.

5. Kraftstoffsystem nach einem der vorhergehenden Ansprüche, **dadurch gekennzeichnet, dass** die Füllstandsbestimmungseinrichtung (14) und/oder ein der Füllstandsbestimmungseinrichtung (14) zugeordnetes Steuergerät dazu ausgebildet sind, ein Überströmventil und/oder mindestens eine Kraftstofffördereinrichtung, insbesondere eine Saugstrahlpumpe, in Abhängigkeit von dem Füllstand des Zwischenspeichers (5) gesteuert und/oder geregelt zu betreiben.

6. Kraftstoffsystem nach einem der vorhergehenden Ansprüche, **dadurch gekennzeichnet, dass** der Abscheidevorrichtung (4) zumindest ein in Abhängigkeit des Kraftstofftankfüllstands schaltendes Belüftungsventil (8) und/oder zumindest ein dem Kraftstofftank zugeordnetes Sicherheitsventil strömungstechnisch vorgeschaltet sind.

7. Verfahren zum Betreiben eines Kraftstoffsystems (1), insbesondere nach einem oder mehreren der vorhergehenden Ansprüche, wobei das Kraftstoffsystem (1) einen Kraftstofftank (2) und eine Entlüftungseinrichtung (3) zur Entlüftung des Kraftstofftanks (2) aufweist und die Entlüftungseinrichtung (3) über zumindest eine einen Zwischenspeicher (5) für flüssigen Kraftstoff aufweisende Abscheidevorrichtung (4) verfügt, wobei mindestens ein der Abscheidevorrichtung (4) strömungstechnisch vorgeschaltetes oder nachgeschaltetes Entlüftungsventil (7) zur Entlüftung des Kraftstofftanks (2) durch die Abscheidevorrichtung (4) vorgesehen ist, und wobei der Füllstand in dem Zwischenspeicher (5) mittels einer der Abscheidevorrichtung (4) zugeordneten Füllstandsbestimmungseinrichtung (14) bestimmt wird, **dadurch gekennzeichnet, dass** das Entlüftungsventil (12) mittels eines der Füllstandsbestimmungseinrichtung (14) zugeordneten Steuergeräts in Abhängigkeit von dem mithilfe der Füllstandsbestimmungseinrichtung (14) bestimmten Füllstand des Zwischenspeichers (5) gesteuert und/oder geregelt betrieben wird.

8. Verfahren nach Anspruch 7, **dadurch gekennzeichnet, dass** ein Überströmventil und/oder mindestens ein Kraftstofffördermittel, insbesondere eine Saugstrahlpumpe, in Abhängigkeit von dem Füllstand des Zwischenspeichers (5) gesteuert und/oder geregelt betrieben werden.

9. Verfahren nach einem der vorhergehenden Ansprüche, **dadurch gekennzeichnet, dass** das Entlüftungsventil (12) bei einem Füllstand des Zwischenspeichers (5) unterhalb eines bestimmten Grenzfüllstands in einer ersten Betriebsart und oberhalb des Grenzfüllstands in einer zweiten Betriebsart betrieben wird, wobei ein das Entlüftungsventil (12) durchströmender Volumenstrom in der zweiten Betriebsart kleiner gewählt wird als in der ersten Betriebsart und/oder in der zweiten Betriebsart ein Öffnen des Entlüftungsventils (12) langsamer erfolgt als in der ersten Betriebsart.

## Claims

1. Fuel system (1), in particular for a motor vehicle, comprising a fuel tank (2) and a ventilation apparatus (3) for ventilating the fuel tank (2), the ventilation apparatus (3) having at least one separation device (4) which comprises at least one intermediate store (5) for liquefied fuel, at least one ventilation valve (7), which is arranged upstream or downstream of the separation device (4) in terms of flow, being provided for ventilation of the fuel tank (2) by means of the separation device, and the separation device (4) comprising a fill level determination apparatus (14) for determining the fill level in the intermediate store (5), **characterised in that** a control device, associated with the fill level determination apparatus (14), is designed to operate the ventilation valve (12) in a controlled manner depending on the fill level of the intermediate store (5) determined by the fill level determination apparatus (14).

2. Fuel system according to claim 1 **characterised in that** the fill level determination apparatus (14) comprises at least one mechanical and/or electrical fill level sensor (15).

3. Fuel system according to claim 2, **characterised in that** the fill level sensor (15) is a capacitive sensor (16), inductive sensor, or resistive sensor.

4. Fuel system according to either claim 2 or claim 3, **characterised in that** the fill-level sensor (15) is a radar sensor, a microwave sensor, an optical sensor, or a fluid sensor (17).

5. Fuel system according to any of the preceding claims, **characterised in that** the fill level determination apparatus (14) and/or a control device associated with the fill level determination apparatus (14) is/are designed to operate an overflow valve and/or at least one fuel delivery apparatus, in particular an ejector, in a controlled manner depending on the fill level of the intermediate store (5).

6. Fuel system according to any of the preceding claims, **characterised in that** at least one aeration valve (8), which is switched depending on the fuel tank fill level, and/or at least one safety valve, which is assigned to the fuel tank, is/are arranged upstream of the separation device (4) in terms of flow.

7. Method for operating a fuel system (1), in particular according to one or more of the preceding claims, the fuel system (1) comprising a fuel tank (2) and a ventilation apparatus (3) for ventilating the fuel tank (2) and the ventilation apparatus (3) having at least one separation device (4) which comprises an intermediate store (5) for liquefied fuel, at least one ventilation valve (7), arranged upstream or downstream of the separation device (4) in terms of flow, being provided for ventilation of the fuel tank (2) by means of the separation device (4), and the fill level in the intermediate store (5) being determined by a fill level determination apparatus (14) assigned to the separation device (4), **characterised in that** the ventilation valve (12) is operated in a controlled manner by a control device, associated with the fill level determination apparatus (14), depending on the fill level of the intermediate store (5) determined by the fill level determination apparatus (14).

8. Method according to claim 7, **characterised in that** an overflow valve and/or at least one fuel delivery means, in particular an ejector, is/are operated in a controlled manner depending on the fill level of the intermediate store (5).

9. Method according to any of the preceding claims, **characterised in that** the ventilation valve (12) is operated when a fill level of the intermediate store (5) is below a determined threshold fill level in a first operating mode and above the threshold fill level in a second operating mode, a volume flow flowing through the ventilation valve (12) being selected so as to be smaller in the second operating mode than in the first operating mode and/or the ventilation valve (12) opening more slowly in the second operating mode than in the first operating mode.

## Revendications

1. Système de carburant (1), en particulier d'un véhicule automobile, comprenant un réservoir de carburant (2) et un dispositif de ventilation pour ventiler le réservoir de carburant (2), dans lequel le dispositif de ventilation (3) dispose d'au moins un dispositif de séparation (4) présentant un réservoir intermédiaire (5) pour du carburant liquide, dans lequel il est prévu au moins une soupape de ventilation (7) montée en amont ou en aval du dispositif de séparation (4) dans le sens d'écoulement afin de ventiler le réservoir de carburant (2) à travers le dispositif de séparation (4) et dans lequel le dispositif de séparation (4) présente un dispositif de détermination de niveau de remplissage (14) pour déterminer le niveau de remplissage dans le réservoir intermédiaire (5), **caractérisé en ce qu'**un appareil de commande affecté au dispositif de détermination de niveau de remplissage (14) est conçu en sorte de commander et/ou de régler la soupape de ventilation (12) afin qu'elle opère en fonction du niveau de remplissage du réservoir intermédiaire (5) déterminé au moyen du dispositif de détermination du niveau de remplissage (14).

2. Système de carburant selon la revendication 1, **caractérisé en ce que** le dispositif de détermination de niveau de remplissage (14) comprend au moins un capteur de niveau de remplissage mécanique et/ou électrique (15).

3. Système de carburant selon la revendication 2,
**caractérisé en ce que** le capteur de remplissage (15) est un capteur capacitif (16), un capteur inductif ou un capteur résistif.

4. Système de carburant selon l'une quelconque des revendications 2 ou 3,
**caractérisé en ce que** le capteur de niveau de remplissage (15) est un capteur radar, un capteur à microondes, un capteur optique ou un capteur de liquide (17).

5. Système de carburant selon l'une quelconque des revendications précédentes, **caractérisé en ce que** le dispositif de détermination de niveau de remplissage (14) et/ou un appareil de commande affecté au dispositif de détermination de niveau de remplissage (14) sont conçus de manière à commander et/ou à régler une soupape de surcharge et/ou au moins un dispositif d'alimentation en carburant, en particulier une pompe à jet aspirant, pour opérer en fonction de l'état de remplissage du réservoir intermédiaire (5).

6. Système de carburant selon l'une quelconque des revendications précédentes, **caractérisé en ce qu'**il est prévu en amont du dispositif de séparation (4) dans le sens d'écoulement au moins une soupape d'aération (8) commutée en fonction du niveau de remplissage du réservoir de carburant et/ou au moins une soupape de sécurité affectée au réservoir de carburant.

7. Procédé d'exploitation d'un système de carburant (1), en particulier selon une ou plusieurs des revendications précédentes, dans lequel le système de carburant (1) présente un réservoir de carburant (2) et un dispositif de ventilation (3) pour ventiler le réservoir de carburant (2) et le dispositif de ventilation (3) dispose d'au moins un dispositif de séparation (4) présentant un réservoir intermédiaire (5) pour du carburant liquide, dans lequel il est au moins prévu une soupape de ventilation (7) disposée en amont ou en aval dans le sens d'écoulement du dispositif de séparation (4) pour ventiler le réservoir de carburant (2) à travers le dispositif de séparation (4), et dans lequel le niveau de remplissage dans le réservoir intermédiaire (5) est déterminé au moyen d'un dispositif de détermination de niveau de remplissage (14) affecté au dispositif de séparation (4), **caractérisé en ce que** la soupape de ventilation (12) est commandée et/ou réglée de manière à opérer au moyen d'un appareil de commande affecté au dispositif de détermination de niveau de remplissage (14) en fonction de l'état de remplissage du réservoir intermédiaire (5) déterminé au moyen du dispositif de détermination du niveau de remplissage (14).

8. Procédé selon la revendication 7, **caractérisé en ce qu'**une soupape de surcharge et/ou un moyen d'alimentation en carburant, en particulier une pompe à jet aspirant, est ou sont commandés et/ou réglés de manière à opérer en fonction de l'état de remplissage du réservoir intermédiaire (5).

9. Procédé selon l'une quelconque des revendications précédentes, **caractérisé en ce que** la soupape de ventilation (12), lors d'un état de remplissage du réservoir intermédiaire (5) qui se situe en dessous d'un état de remplissage limite déterminé, est actionnée dans un premier mode de fonctionnement et, au-dessus de l'état de remplissage limite, dans un second mode de fonctionnement, dans lequel un courant volumique parcourant la soupape de ventilation (12) est choisi plus petit dans le second mode de fonctionnement que dans le premier mode de fonctionnement et/ou l'ouverture de la soupape de ventilation (12) se fait plus lentement dans le second mode de fonctionnement que dans le premier mode de fonctionnement.
